# EUROPEAN PATENT SPECIFICATION

(11) **EP 0 477 796 B1**
(45) Date of publication and mention of the grant of the patent: **16.08.1995**
(21) Application number: 91116042.2
(22) Date of filing: 20.09.1991
(51) Int. Cl.: G01W 1/17

(54) **Method and apparatus for calculating thermal sensitivity**
Verfahren und Vorrichtung zum Berechnen der thermischen Sensibilität
Procédé et dispositif pour calculer la sensibilité thermique

(30) Priority: 25.09.1990 JP 256723/90
(43) Date of publication of application: 01.04.1992
(73) Proprietor: YAMATAKE-HONEYWELL CO. LTD., Tokyo 150 (JP)
(72) Inventor: Kon, Akihiko, c/o Fujisawa Factory, Fujisawa-shi, Kanagawa (JP)
(74) Representative: Kahler, Kurt, Dipl.-Ing.

(56) References cited:
- EP-A- 0 214 294
- EP-A- 0 279 865
- EP-A- 0 476 691
- EP-A- 0 495 117
- DE-A- 1 798 439
- DE-U- 8 908 474
- FR-A- 2 231 018
- FR-A- 2 325 915
- US-A- 4 125 012
- US-A- 4 504 157

## Description

### Background of the Invention

The present invention relates to a method and an apparatus for calculating thermal sensitivity, e.g., an equivalent temperature (Teq), felt by a human body, and a method and an apparatus for calculating a PMV (Predicted Mean Vote) value as predicted mean thermal Sensitivity representing the degree of comfort in an indoor environment.

The equivalent temperature Teq is used as an evaluation index of a thermal environment felt by a human body, i.e., thermal sensitivity.

As a first method of obtaining this equivalent temperature Teq, a method is proposed, in which an equivalent temperature Teq* substantially equal to the equivalent temperature Teq of the human body is obtained by measuring a radiant temperature Tr, an air temperature Ta, and an air velocity Vair by using different sensors, and performing predetermined arithmetic processing of the measured values. This method requires complicated arithmetic processing, and the processing time is undesirably prolonged.

Under the circumstances, as a second method of obtaining the equivalent temperature Teq, a method is proposed, in which a heater is incorporated in a module main body, and the amount of power to be supplied to the heater is controlled to always keep a temperature (sensor temperature) T_{cr} of the module main body to be a constant value (e.g., 36.5°C). According to this method, the equivalent temperature Teq* can be calculated by measuring the amount of power to be supplied to the heater and performing predetermined arithmetic processing of the measured value.

In a conventional method, as a formula for calculating predicted mean thermal sensitivity PMV representing the degree of comfort in an indoor environment, the PMV equation defined by ISO 7730, i.e., the following equation (1), has been employed:${\text{PMV = (0.303e}}^{\text{-0.036M}} \text{+ 0.028) x [(M - W') - 3.05 x 10⁻³·{5733 - 6.99(M - W') - Pa} - 0.42{(M - W') - 58.15} - 1.7 x 10⁻⁵·M·(5867 - Pa) - 0.0014·M·(34 - Ta) - 3.96·10⁻⁸·fcℓ·{(Tcℓ + 273)⁴ - (Tr + 273)⁴} - fcℓ·hc·(Tcℓ - Ta)]}$ for$\text{Tcℓ = Tsk - 0.155·Icℓ·[3.96 x 10⁻⁸·fcℓ·{(Tcℓ + 273)⁴ - (Tr + 273)⁴} + fcℓ·hc·(Tcℓ - Ta)]}$ 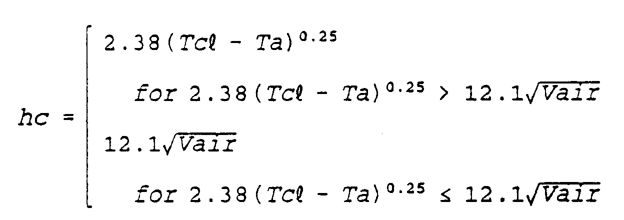
Tcℓ = clothing surface temperature
Tsk = skin temperature
Pa = RH·Pa*
RH = humidity
Pa* = saturated water vapor pressure
M = activity amount
W' = work amount
Ta = air temperature
Tr = radiant temperature
Icℓ = clothing thermal resistance
Vair = air velocity
fcℓ = factor
According to this method, the predicted mean thermal sensitivity PMV can be automatically calculated by measuring the respective parameters and substituting the measurements into equation (1).

In practice, however, it is difficult to measure all tie parameters in a room of a building. Moreover, the above PMV equation itself is complicated.

Under the circumstances, the present applicant has proposed a method of obtaining a predicted mean sensitivity PMV*, as a value coinciding with the predicted mean sensitivity PMV with high accuracy, by using the above-mentioned equivalent temperature Teq* and simple formulae.

In the above-described second method of obtaining the equivalent temperature Teq, however, since an environment measuring section constituted by the module main body and the heater is much smaller than a human body, as it is apparent, the air current sensitivity of the measuring section is much larger than that of the human body.

This difference in air current sensitivity indicates that the equivalent temperature Teq can be properly measured within a low air velocity region in which the air velocity Vair is about 0.1 m/s, whereas the deviation of the equivalent temperature Teq* from the equivalent temperature Teq is increased in an air velocity region in which the air velocity Vair is higher than 0.1 m/s, and accurate measurement cannot be performed. That is, even with a slight increase in the air velocity Vair, the equivalent temperature Teq* becomes much smaller than the equivalent temperature Teq because of the high air current sensitivity.

According to the second method described above, therefore, there is a critical drawback that accurate measurement cannot be performed when the air velocity Vair is high, in spite of the advantage that the radiant temperature Tr, the air temperature Ta, and the air velocity Vair can be integrally measured, i.e., the advantage that the arithmetic processing can be simplified.

The difference between the equivalent temperature Teq and the equivalent temperature Teq* affects arithmetic processing of the predicted mean thermal sensitivity PMV*. If the air velocity Vair is high, the predicted mean thermal sensitivity PMV* cannot be accurately obtained.

For example, EP-A-0 495 117, reflecting a state of the art according to Article 54 (3) EPC, describes a method and apparatus for calculating thermal sensitivity in which thermal energy is supplied to a heater so as to keep a temperature of a sensor provided for the heater at a predetermined set temperature. The thermal sensitivity is calculated on the basis of an air temperature, a clothing thermal resistance, the predetermined set temperature and the thermal energy. This document further describes a simplified formula for predicted mean thermal sensitivity so that complicated arithmetic operations are not required.

Furthermore, EP-A-0 476 691, also reflecting a state of the art according to Article 54 (3) EPC, describes a method and apparatus for calculating thermal sensitivity in which the above-mentioned set temperature is calculated on the basis of an air temperature and a clothing thermal sensitivity. The calculated set temperature is used to calculate an equivalent temperature Teq*:${\text{Teq* = b₁ + b₂ x ϑ}}_{\text{(th)}} {\text{+ b₃ x Ta - b₄ x Hϑ}}_{\text{(th)}}$ which will be discussed later.

### Summary of the Invention

The present invention has been made to solve the above-mentioned problems, and has its object, of to provide a method and apparatus for calculating thermal sensitivity, in which a set temperature ϑ₍ₜₕ₎ is calculated on the basis of an air temperature Ta and a clothing thermal resistance Icℓ, thermal energy information Hϑ₍ₜₕ₎ is supplied to heating means capable of adjusting a sensor temperature Tcr so as to set the set temperature ϑ₍ₜₕ₎ to be equal to the sensor temperature Tcr, and an equivalent temperature Teq* is calculated on the basis of the air temperature Ta, the set temperature ϑ₍ₜₕ₎, the thermal energy information Hϑ₍ₜₕ₎, and coefficients b₁ to b₄, according to the following equation (a), when the sensor temperature Tcr is lower than the set temperature ϑ₍ₜₕ₎,
whereas the equivalent temperature Teq* is calculated on the basis of the air temperature Ta, the set temperature ϑ₍ₜₕ₎, a difference ΔTcr between the sensor temperature Tcr and the set temperature ϑ₍ₜₕ₎, an air velocity Vair, a coefficient c₁ expressed in consideration of the clothing thermal resistance Icℓ, coefficients c₂ to c₆, and a coefficient n, according to the following equation (b), when the sensor temperature Tcr is higher than the set temperature ϑ₍ₜₕ₎,$\begin{matrix}\begin{matrix}\begin{matrix}{\text{Teq* = b₁ + b₂ x ϑ}}_{\text{(th)}} {\text{+ b₃ x Ta - b₄ x Hϑ}}_{\text{(th)}}\end{matrix} \\ \begin{matrix}{\text{Teq* = c₁ + c₂ x ϑ}}_{\text{(th)}} {\text{+ c₃ x Ta + c₄ x (1 + c₅ x Vair}}^{\text{n}} {\text{) x ΔTcr - c₆ x Hϑ}}_{\text{(th)}}\end{matrix}\end{matrix}\end{matrix}$

According to a particular embodiment of the present invention, the predicted mean thermal sensitivity PMV* is calculated on the basis of the obtained equivalent temperature Teq*, a humidity RH, an activity amount Mₑₜ, a skin temperature Tₛₖ ( ${\text{T}}_{\text{sk}} {\text{= 35.7 - 0.0275 x M}}_{\text{et}} \text{X 58.15}$ ), the air temperature Ta, an absolute water vapor pressure P(Ta) at the air temperature Ta, the clothing thermal resistance Icℓ, a thermal resistance effect Fcℓ ( $\text{Fcℓ = E₁/(E₂ + E₃ x Icℓ)}$ ) based on coefficients E₁ to E₃, and coefficients D₁ to D₇, according to the following equation (c),$\text{PMV* = α x LOAD*}$ where ${\text{α = 0.303 x EXP(-0.036 X M}}_{\text{et}} \text{x 58.15) + 0.028}$
if Mₑₜ < 1.0, then${\text{LOAD* = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} {\text{) x RH x P(Ta) - Fcℓ x (T}}_{\text{sk}} \text{- Teq*)}$ if Mₑₜ ≧ 1.0, then${\text{LOAD* = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} {\text{) x RH x P(Ta) - D₇ x (M}}_{\text{et}} {\text{- 1) - Fcℓ x (T}}_{\text{sk}} \text{-Teq*)}$ According to the present invention, therefore, the set temperature ϑ₍ₜₕ₎ is determined on the basis of the air temperature Ta and the clothing thermal resistance Icℓ, and the thermal energy information Hϑ₍ₜₕ₎ is supplied to the heating means to make the set temperature ϑ₍ₜₕ₎ coincide with the sensor temperature Tcr.

That is, the sensor temperature Tcr is controlled to be equal to the set temperature ϑ₍ₜₕ₎ which is not constant and changes depending on environmental conditions.

According to the the present invention, when the sensor temperature Tcr is higher than the set temperature ϑ₍ₜₕ₎, i.e., the module main body is in a heated state in which the sensor temperature Tcr is higher than the set temperature ϑ₍ₜₕ₎, the equivalent temperature Teq* is calculated on the basis of the air temperature Ta, the set temperature ϑ₍ₜₕ₎, the difference ΔTcr, the air velocity Vair, the coefficients c₁ to c₆, and the coefficient n, and when the sensor temperature Tcr is lower than the set temperature ϑ₍ₜₕ₎, i.e., the module main body is set in a cooled state in which the thermal energy information Hϑ₍ₜₕ₎ is required, the equivalent temperature Teq* is calculated on the basis of the air temperature Ta, the set temperature ϑ₍ₜₕ₎, the thermal energy information Hϑ₍ₜₕ₎, and the coefficients b₁ to b₄.

### Brief Description of the Drawings

Figs. 1(A) and 1(B) are block diagrams, each showing the process of arithmetic operations performed by a calculating section in a thermal sensitivity calculating apparatus in Fig. 2;
Fig. 1(C) is a block diagram showing the process of arithmetic operations performed by a calculating section in a predicted mean sensitivity calculating apparatus in Fig. 4;
Fig. 2 is a block diagram showing the thermal sensitivity calculating apparatus according to an embodiment of the present invention;
Figs. 3(A) to 3(D) are schematic longitudinal sectional views, each showing an arrangement of an environment measuring section; and
Fig. 4 is a block diagram showing the predicted mean thermal sensitivity calculating apparatus according to another embodiment of the present invention.

### Description of the Preferred Embodiments

The present invention will be described in detail below.

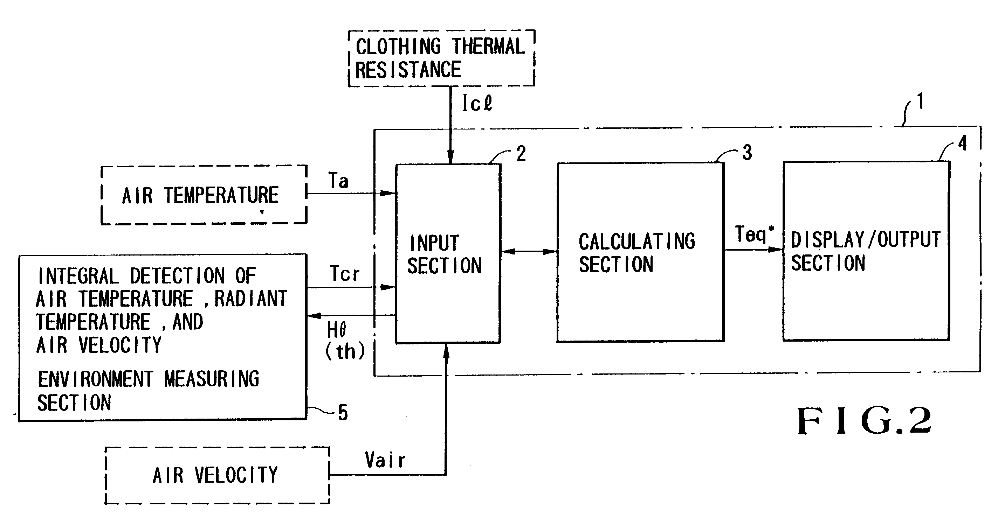

Fig. 2 shows a thermal sensitivity calculating apparatus according to an embodiment of the present invention, which is associated with the first, second, fifth, and sixth aspects of the present invention.

This thermal sensitivity calculating apparatus 1 comprises an input section 2, a calculating section 3, and a display/output section 4. The input section 2 receives not only a clothing thermal resistance Icℓ as a set value but also an air temperature Ta and a sensor temperature Tcr from an environment measuring section 5 as detection values. These set and detection values are then supplied from the input section 2 to the calculating section 3. The calculating section 3 then obtains a set temperature value ϑ₍ₜₕ₎, heater power Hϑ₍ₜₕ₎ as thermal energy, and an equivalent temperature Teq*.

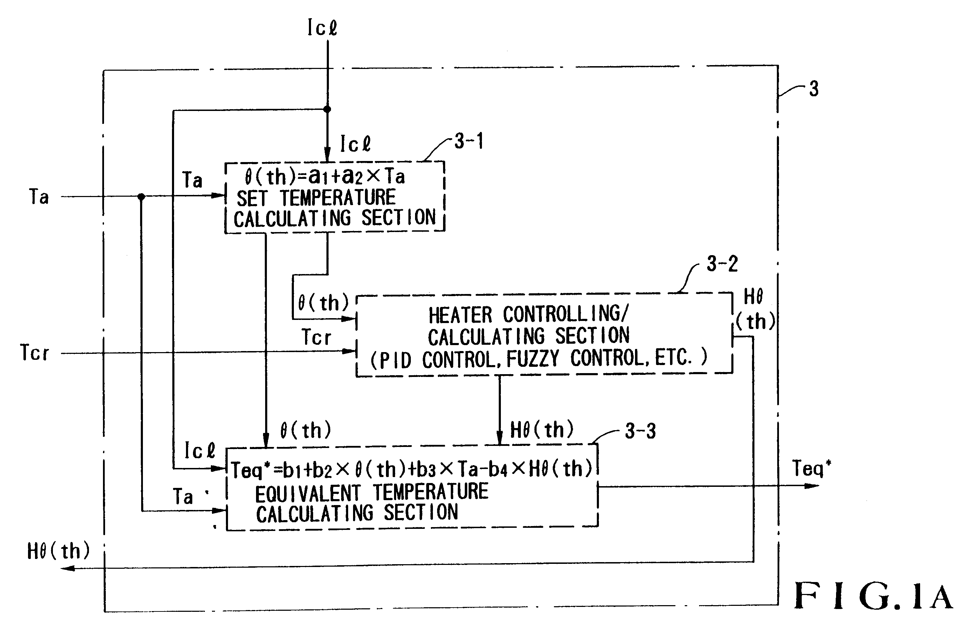

More specifically, in the calculating section 3, as shown in Fig. 1A, the set temperature value ϑ₍ₜₕ₎ is calculated by the following equation (2) on the basis of the air temperature Ta and the clothing thermal resistance Icℓ by using a set temperature calculating section 3-1. Note that values a₁ and a₂ in equation (2) will be described later.$\text{ϑ(th) = a₁ + a₂ x Ta}$ Subsequently, a heater controlling/calculating section 3-2 measures the heater power Hϑ₍ₜₕ₎ (W) while performing PID control or fuzzy control to set the set temperature ϑ₍ₜₕ₎ to be qual to the sensor temperature Tcr. The obtained heater power Hϑ₍ₜₕ₎ (W) is supplied to the environment measuring section 5 through the input section 2.

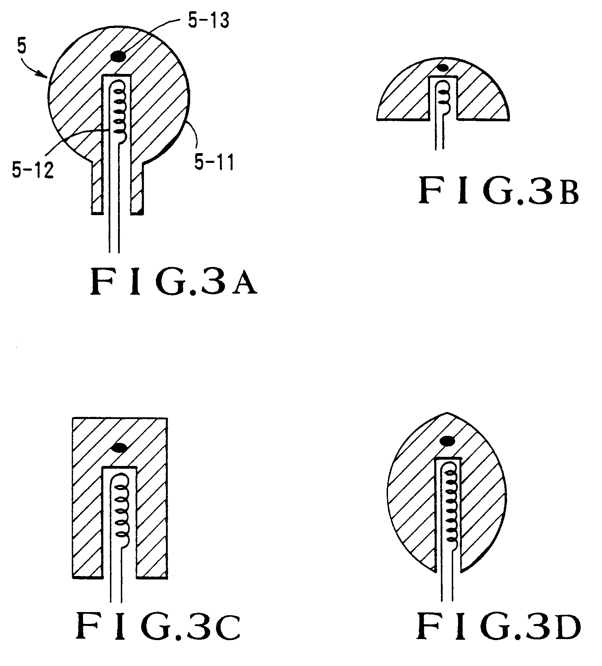

The environment measuring section 5 will be further described below. As shown in, e.g., Fig. 3(A), the environment measuring section 5 comprises a spherical module main body 5-11, a heater 5-12 arranged in the module main body 5-11, and a temperature sensor 5-13 arranged on the module main body 5-11. The module main body 5-11 consists of a metal having high thermal conductivity, such as copper or aluminum. The outer surface of the module main body 5-11 is formed to have high emissivity so as to be sensitive to a radiant temperature Tr. Note that the module main body 5-11 of the environment measuring section 5 may have a hemispherical shape, a cylindrical shape, or an elliptical shape, as shown in Figs. 3(B), 3(C), and 3(D).

The above-mentioned heater power Hϑ₍ₜₕ₎ is supplied to the heater 5-12 of the environment measuring section 5. The module main body 5-11 is then heated by the heater 5-12 and is controlled such that the sensor temperature Tcr detected by the temperature sensor 5-13 becomes equal to the set temperature ϑ₍ₜₕ₎.

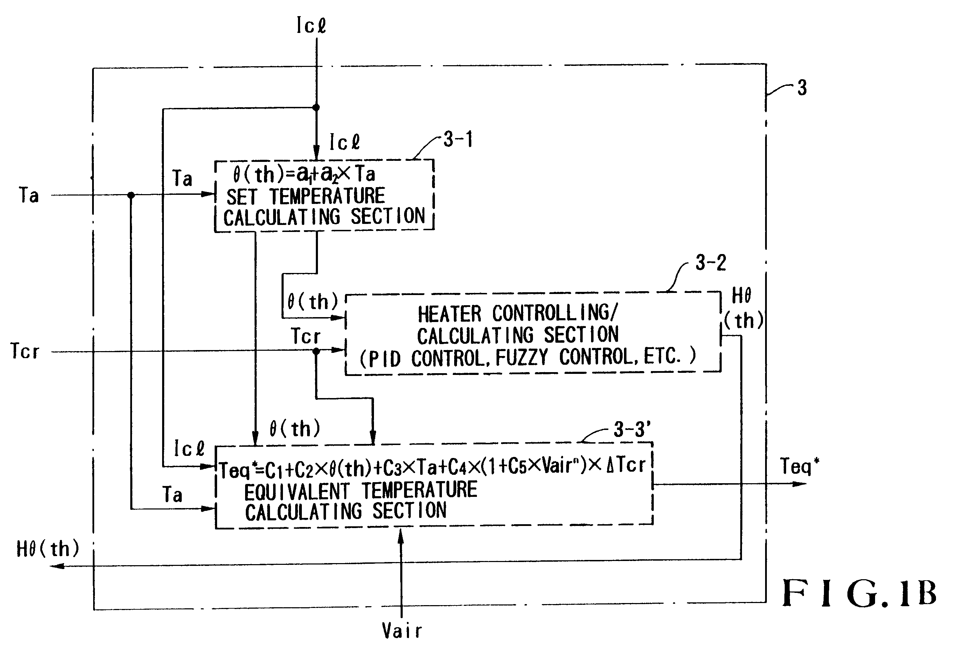

Assume that the sensor temperature Tcr is lower than the set temperature ϑ₍ₜₕ₎, i.e., the module main body 5-11 is in a cooled state in which the heater power Hϑ₍ₜₕ₎ needs to be supplied to the heater 5-12. In this case, in an equivalent temperature calculating section 3-3, an equivalent temperature Teq* is calculated by the following equation (3) on the basis of the air temperature Ta, the clothing thermal resistance Icℓ, the set temperature ϑ₍ₜₕ₎, and the heater power Hϑ₍ₜₕ₎. Note that b₁, b₂, b₃, and b₄ in equation (2) will be described later.${\text{Teq* = b₁ + b₂ x ϑ}}_{\text{(th)}} {\text{+ b₃ x Ta - b₄ x Hϑ}}_{\text{(th)}}$ In contrast to this, assume that the sensor temperature Tcr is higher than the set temperature ϑ₍ₜₕ₎, i.e., the heater power Hϑ₍ₜₕ₎ is zero and the module main body 5-11 is in a heated state in which the sensor temperature Tcr is higher than the set temperature ϑ₍ₜₕ₎. In this case, an equivalent temperature calculating section 3-3' shown in Fig. 1(B) calculates the equivalent temperature Teq^{*} on the basis of the air temperature Ta, the set temperature ϑ₍ₜₕ₎, the sensor temperature Tcr, a difference ΔTcr between the sensor temperature Tcr and the set temperature ϑ₍ₜₕ₎, the air velocity Vair, a coefficient c₁ expressed in consideration of the clothing thermal resistance Icℓ, coefficients c₂ to c₅, and a coefficient n, according to the following equation (4). Note that the coefficients c₁ to c₅ of equation (4) will be described later.${\text{Teq* = c₁ + c₂ x ϑ}}_{\text{(th)}} {\text{+ c₃ x Ta + c₄ x (1 + c₅ x Vair}}^{\text{n}} \text{) x ΔTcr}$ The equivalent temperatures Teq* obtained by the equivalent temperature calculation sections 3-3 and 3-3' are supplied to the display/output section 4 to be displayed.

As described above, according to the thermal sensitivity calculating apparatus 1 of this embodiment, the set temperature ϑ₍ₜₕ₎ is obtained on the basis of the clothing thermal resistance Icℓ and the air temperature Ta, and the heater power Hϑ₍ₜₕ₎ to be supplied to the heater 5-12 is controlled such that the sensor temperature Tcr coincides with the set temperature ϑ₍ₜₕ₎. If the sensor temperature Tcr is lower than the set temperature ϑ₍ₜₕ₎, the equivalent temperature Teq* is calculated on the basis of the air temperature Ta, the clothing thermal resistance Icℓ, the set temperature ϑ₍ₜₕ₎, and the heater power Hϑ₍ₜₕ₎. If the sensor temperature Tcr is higher than the set temperature ϑ₍ₜₕ₎, the equivalent temperature Teq^{*} is calculated on the basis of the air temperature Ta, the set temperature ϑ₍ₜₕ₎, the difference ΔTcr between the sensor temperature Tcr and the set temperature ϑ₍ₜₕ₎, the air velocity Vair, the coefficients c₁ to c₅, and the coefficient n. Therefore, even if the air velocity Vair is high, or the sensor temperature Tcr is higher than the set temperature ϑ₍ₜₕ₎, the equivalent temperature Teq* coincides with the equivalent temperature Teq felt by a human body with high accuracy. This allows accurate measurement of an equivalent temperature.

The mechanism which allows coincidence between the equivalent temperature Teq^{*} and the equivalent temperature Teq with high accuracy will be additionally described below.

The mechanism which allows the equivalent temperature Teq^{*}, obtained by the equivalent temperature calculating section 3-3 to coincide with the equivalent temperature Teq with high accuracy will be described first.

Assuming that heater power to be supplied to the environment measuring section 5 is represented by H, the heater power H is dispersed by environmental conditions (the air temperature Ta, the radiant temperature Tr, and the air velocity Vair). If the surface temperature of the module main body 5-11 is T (°C), then${\text{H = Hr x (T - Tr) + A x Vair}}^{\text{n}} \text{x (T - Ta)}$ where $\text{Hr = (heat transmission coefficient by radiation) x (area)}$
${\text{A x Vair}}^{\text{n}} \text{= (heat transmission coefficient by convection) x (area)}$
Equation (5) can be rewritten into equation (6): 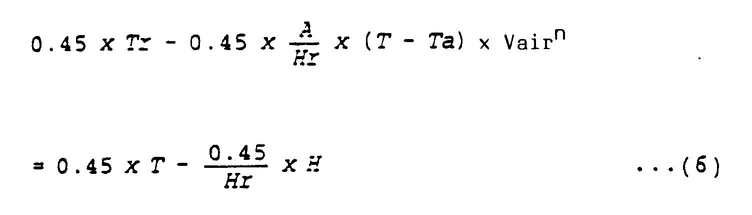
The equivalent temperature Teq felt by a human body is defined by equation (7): 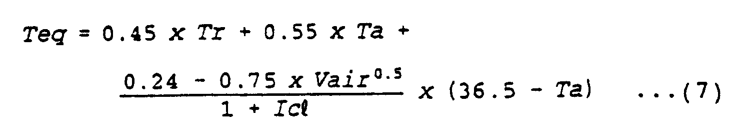
It is apparent from the comparison between equations (6) and (7) that if T = 36.5 is set, and to both the left- and right-hand sides of equation (6) the following expression is added 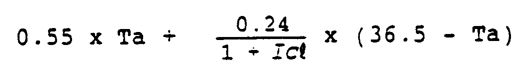
then, the resulting value is substantially equal to the equivalent temperature Teq. Therefore, equation (6) is rewritten as equation (8): 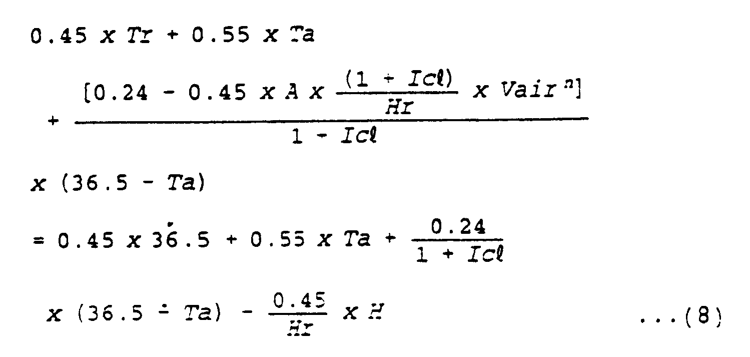
On the left hand side of the equations, the difference between equations (8) and (7) resides in

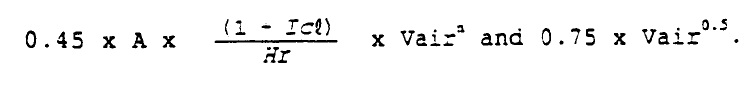

Since the environment measuring section 5 is small, its air velocity sensitivity inevitably becomes higher than that of a human body. That is, because of the surface effect of the environment measuring section 5, its air velocity sensitivity portion becomes larger than that of a human body to be 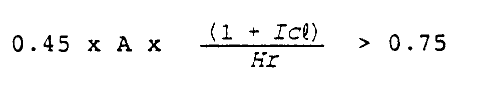
Since this inequality sign remains throughout the arithmetic processing, the obtained equivalent temperature is much lower than the equivalent temperature Teq felt by a human body at a place where the air velocity Vair is high. Therefore, an accurate equivalent temperature cannot be obtained.

In this embodiment, therefore, in order to make the air velocity sensitivity of the environment measuring section 5 coincide with that of a human body, equations (8) and (7) are reconsidered in terms of temperature differences (36.5 - Ta) as well as air velocity sensitivity coefficients. As a result, it is found that such coincidence can be achieved by controlling the heater power Hϑ₍ₜₕ₎ supplied to the environment measuring section 5 at a temperature of ϑ₍ₜₕ₎°C instead of 36.5°C so as to establish the following equation: 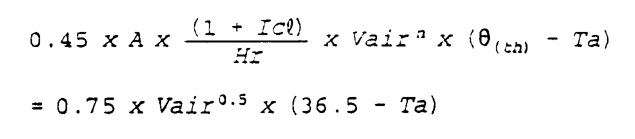
That is, 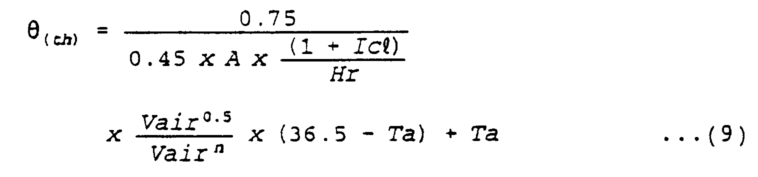
Since n varies from 0.35 to 0.6 in the range of 0.1 to 1.0 m/s, Vair^{0.5} ≒ Vairⁿ can be established, and the set temperature ϑ₍ₜₕ₎ can be given by 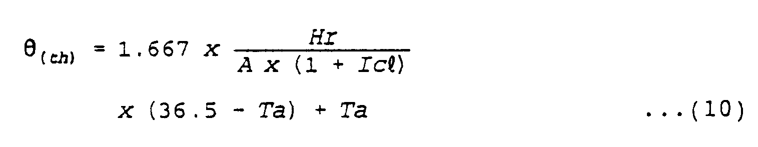
In this embodiment, the set temperature ϑ₍ₜₕ₎ is obtained on the basis of the clothing thermal resistance Icℓ and the air temperature Ta, and the heater power Hϑ₍ₜₕ₎ to be supplied to the heater 5-12 is controlled to make the sensor temperature Tcr coincide with the set temperature ϑ₍ₜₕ₎, thus obtaining the equivalent temperature Teq* by calculating the following formula on the basis of the air temperature Ta, the clothing thermal resistance Icℓ, the set temperature ϑ₍ₜₕ₎, and the heater power Hϑ₍ₜₕ₎: 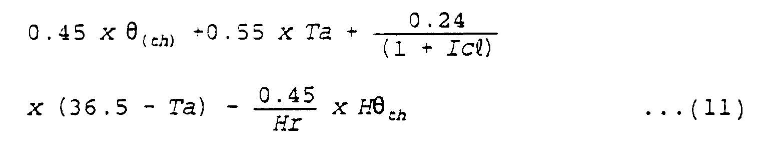
Therefore, even if the air velocity Vair in a normal building office is high, an equivalent temperature can be accurately measured.

If, in equation (10), 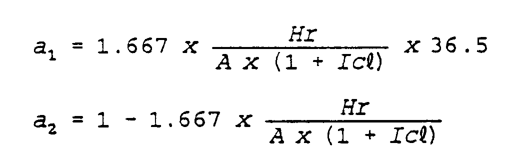
then, ${\text{ϑ}}_{\text{(th)}} \text{= a₁ + a₂ x Ta}$ .

If, in equation (11), 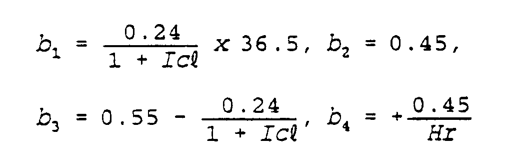
then,${\text{Teq* = b₁ + b₂ x ϑ}}_{\text{(th)}} {\text{+ b₃ x Ta - b₄ x Hϑ}}_{\text{(th)}}$ The mechanism which allows the equivalent temperature Teq^{*} obtained by the equivalent temperature calculating section 3-3' to coincide with the equivalent temperature Teq with high accuracy will be described next.

In a heated state in which the heater power Hϑ₍ₜₕ₎ is zero and the sensor temperature Tcr is higher than the set temperature ϑ₍ₜₕ₎, the module main body 5-11 is heated in some way. In this case, the formulae associated with the environment measuring section 5 are checked again. Since Hϑ₍ₜₕ₎ = 0,${\text{0 = Hr x (Tcr - Tr) + A x Vair}}^{\text{n}} \text{x (Tcr - Ta)}$ Since Tcr > ϑ₍ₜₕ₎, ${\text{Tcr = ϑ}}_{\text{(th)}} \text{+ ΔTcr (ΔTcr ≧ 0)}$ .

Consequently,${\text{0 = Hr x [(ϑ}}_{\text{(th)}} {\text{+ ΔTcr) - Tr)] + A x Vair}}^{\text{n}} \text{x [(ϑ(th) + ΔTcr) - Ta)]}$ Then,${\text{0 = Hr x (ϑ}}_{\text{(th)}} {\text{- Tr) + A x Vair}}^{\text{n}} {\text{x (ϑ}}_{\text{(th)}} {\text{- Ta) +(Hr + A x Vair}}^{\text{n}} \text{) x ΔTcr}$ Equation (14) can be rewritten into 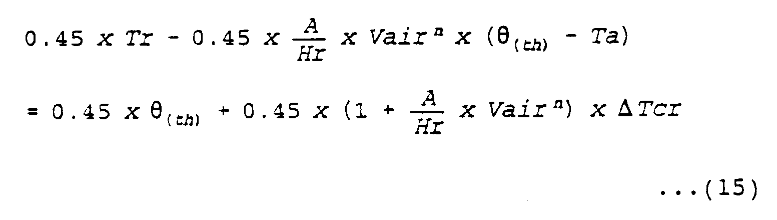
Similar to the rewriting from equation (6) to equation (8), if to the left- and right-hand sides of equation (15) 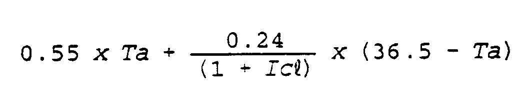
is added, then, 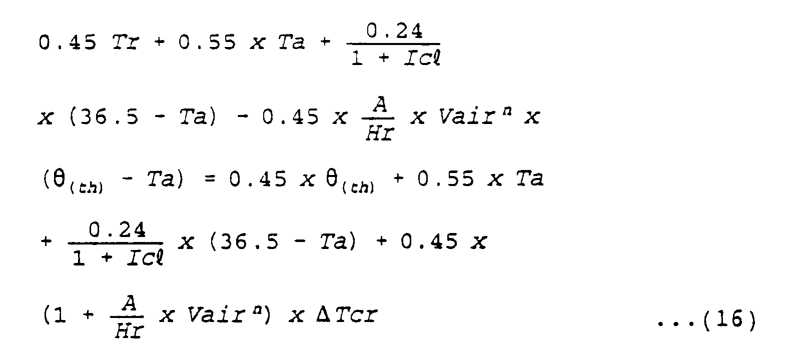
The left-hand side of equation (16) is 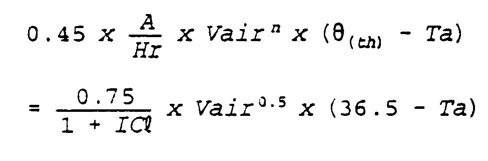
This exactly represents the equivalent temperature Teq.

If, therefore, the set temperature ϑ₍ₜₕ₎ is obtained on the basis of the clothing thermal resistance Icℓ and the air temperature Ta, and the equivalent temperature Teq* is obtained on the basis of the air temperature Ta, the set temperature ϑ₍ₜₕ₎, the difference ΔTcr between the sensor temperature Tcr and the set temperature ϑ₍ₜₕ₎, the air velocity Vair, and the clothing thermal resistance Icℓ, according to the following equation: 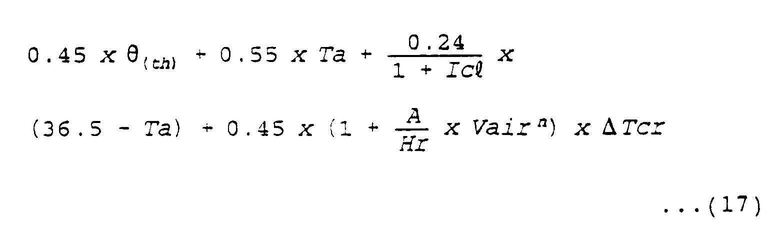
then, the equivalent temperature Teq can be properly measured even if the sensor temperature Tcr is higher than the set temperature ϑ₍ₜₕ₎.

Note that if, in equation (17), 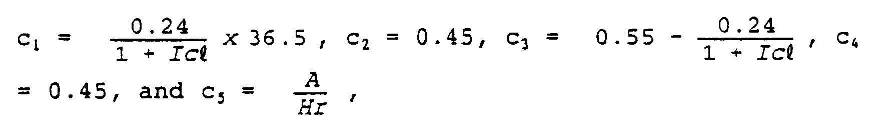
then${\text{Teq* = c₁ + c₂ x ϑ}}_{\text{(th)}} {\text{+ c₃ x Ta + c₄ x (1 + c₅ x Vair}}^{\text{n}} \text{) x ΔTcr}$ Although the heated state has been described above, in which the heater power Hϑ₍ₜₕ₎ is zero and the sensor temperature T_{cr} is higher than the set temperature ϑ₍ₜₕ₎, equation (4) represents only one case in which the heater power Hϑ₍ₜₕ₎ is zero in the following equation (4'):${\text{Teq* = c₁ + c₂ x ϑ}}_{\text{(th)}} {\text{+ c₃ x Ta + c₄ x (1 + c₅ x Vair}}^{\text{n}} {\text{) x ΔTcr - c₆ x Hϑ}}_{\text{(th)}}$ where c₆ = +0.45/Hr.

Furthermore, in the above embodiment, the air velocity Vair is obtained by using an air velocity sensor. Assuming that the environment measuring section 5 is arranged indoors, even if the air velocity Vair is set to be an arbitrary value, e.g., 0.2 m/s in consideration of the fact that the indoor air velocity mostly ranges from 0.1 to 0.3 m/s, a large error is not produced in the equivalent temperature Teq. That is, the air velocity sensor need not always be used. This ensures the simplification of the apparatus and prevents an increase in cost. Assume that the air velocity Vair is increased. Even in this case, since thermal energy is taken away from the module main body 5-11, and the sensor temperature Tcr eventually becomes lower than the set temperature ϑ₍ₜₕ₎ to start a normal heating operation by means of the heater, the equivalent temperature Teq can be obtained by the scheme in a cooled state.

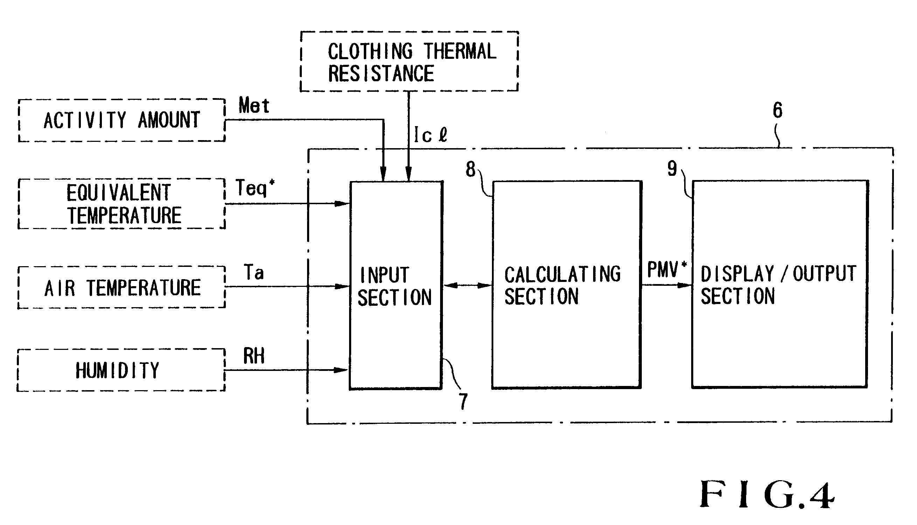

Fig. 4 shows a predicted mean thermal sensitivity calculating apparatus according to another embodiment of the present invention, which is associated with the third, fourth, seventh, and eighth aspects of the present invention.

This predicted mean thermal sensitivity calculating apparatus 6 comprises an input section 7, a calculating section 8, and a display/output section 9. The input section 7 receives an activity amount Mₑₜ of a human body and a clothing thermal resistance Icℓ as set values, in addition to an air temperature Ta, a humidity RH, and an equivalent temperature Teq* as detection values. The equivalent temperature Teq^{*} is supplied as an output from the calculating section 3 of the thermal sensitivity calculating apparatus 1 shown in Fig. 2. These set and detection values are supplied from the input section 7 to the calculating section 8. The calculating section 8 then calculates a predicted mean sensitivity PMV* according to the following equation (18):$\text{PMV* = α x LOAD*}$ where ${\text{α= 0.303 x EXP(-0.036 x M}}_{\text{et}} \text{x 58.15) + 0.028}$${\text{LOAD* = PMVLOAD - Fcℓ x (T}}_{\text{sk}} \text{- Teq*)}$ If Mₑₜ < 1.0, then${\text{PMVLOAD = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} \text{) x RH x P(Ta)}$ If Mₑₜ ≧ 1.0, then${\text{PMVLOAD = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} {\text{) x RH x P(Ta) - D₇ x (M}}_{\text{et}} \text{- 1)}$ where the values of the D₁ to D₇ are set, for example, as follows: D₁ = 10.2895, D₂ = 49.5152, D₃ = 0.7808, D₄ = 0.08142, D₅ = 0.004067, D₆ = 0.00133338, and D₇ = 24.423, ${\text{T}}_{\text{sk}} {\text{= skin temperature (T}}_{\text{sk}} {\text{= 35.7 - 0.0275 x M}}_{\text{et}} \text{x 58.15}$ 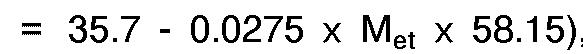 ), $\text{P(Ta) = absolute water vapor pressure at air temperature Ta [P(Ta) = EXP(18.6686 - 4030.183/(Ta + 235)]}$ 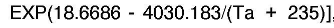 , and $\text{Fcℓ = clothing thermal resistance effect (Fcℓ = E₁/(E₂ + E₃ x Icℓ))}$ 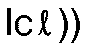 .

For example, the values of E₁ to E₃ are set as follows: E₁ = 8.976, E₂ = 1, and E₃ = 1.466.

In this embodiment, P(Ta) is based on the Antoine equation (saturated water vapor pressure). However, other equations may be used.

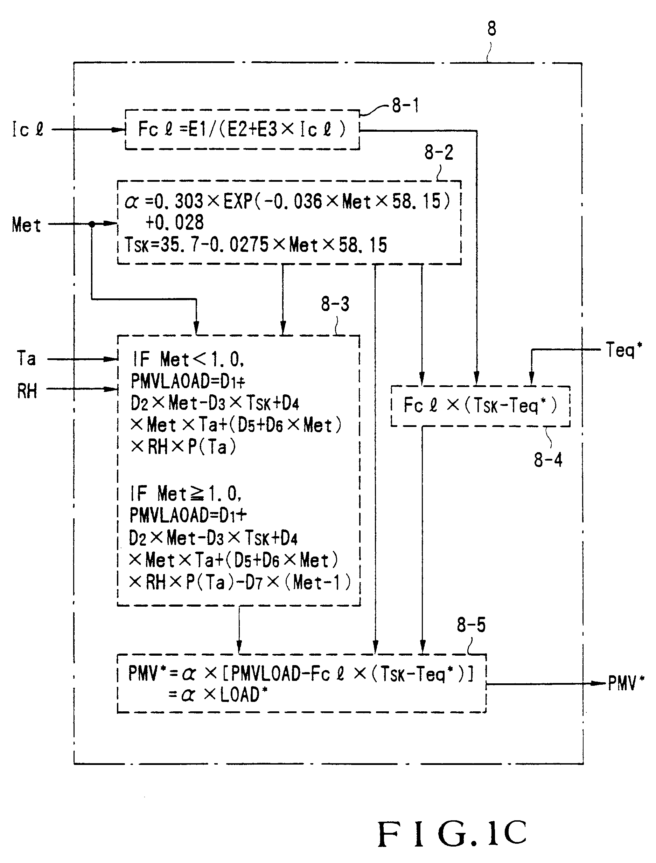

Fig. 1(c) shows the process of arithmetic operations performed by the calculating section 8. More specifically, in an Fcℓ calculating section 8-1, a thermal resistance effect Fcℓ is calculated by using the clothing thermal resistance Icℓ. In an α·Tₛₖ calculating section 8-2, the value α and the skin temperature Tₛₖ are calculated by using the activity amount Mₑₜ. In a PMVLOAD calculating section 8-3, PMVLOAD is calculated by using the skin temperature Tₛₖ, the activity amount Mₑₜ, the air temperature Ta, the relative humidity RH, and the absolute water vapor pressure P(Ta). In a calculating section 8-4, ${\text{Fcℓ x (T}}_{\text{sk}} \text{- Teq*)}$ is calculated by using the thermal resistance effect Fcℓ, the skin temperature Tₛₖ, and the equivalent temperature Teq*. Finally, in a PMV^{*} calculating section 8-5, LOAD* is obtained by subtracting ${\text{Fcℓ x (T}}_{\text{sk}} \text{- Teq*)}$ 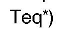 obtained by the calculating section 8-4 from PMVLOAD obtained by the calculating section 8-3, and the predicted mean thermal sensitivity PMV* is calculated by multiplying the value LOAD^{*} by the value a obtained by the calculating section 8-2.

Equation (18) is obtained by the present invention by trial and error to simplify the conventional PMV equation (equation (1)). Owing to the synergistic effect based on the fact that the equivalent temperature Teq* can be accurately obtained, the PMV* value obtained by this equation coincides with the PMV value obtained by the conventional PMV equation with considerably high accuracy. Table 1 shows the comparison between PMV and PMV* in the presence of air and in a summertime under the following conditions: Mₑₜ = 1.2, Icℓ = 0.5, RH = 50%, $\text{Ta = Tr = 30°C}$ , and Vair = 0.4 m/s. Table 2 shows the comparison between PMV and PMV* in the presence of air and in a wintertime under the following conditions: Mₑₜ = 1.2, Icℓ = 1.0, RH = 50%, $\text{Ta = Tr = 18°C}$ , and Vair = 0.4 m/s. It is apparent from these tables that PMV and PMV^{*} coincide with each other with only a small error (about 0.1).

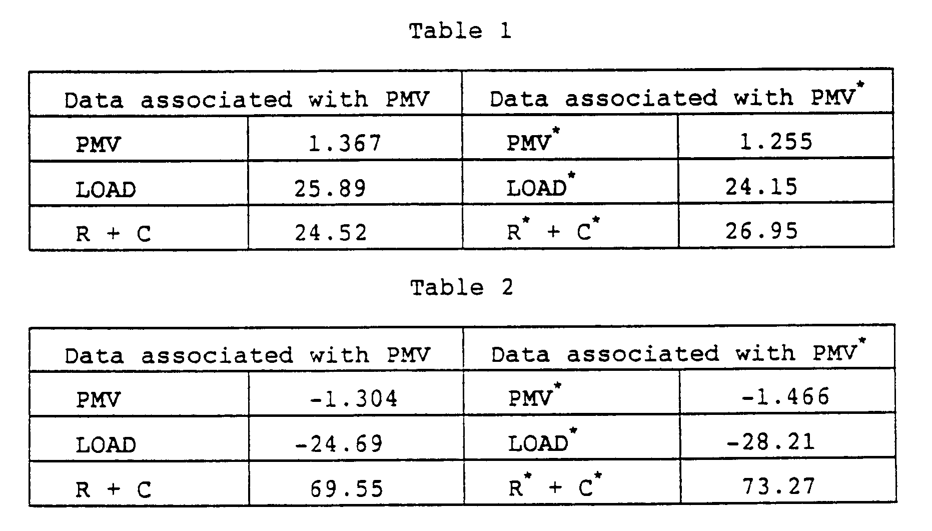

In the above tables, "LOAD" indicates a collective portion in equation (1) expressed as ${\text{PMV = (0.303e}}^{\text{-0.036M}} \text{+ 0.028) x LOAD}$ 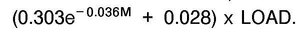 . In addition, in $\text{R + C = 3.96 x 10⁻⁸·fcℓ·{Tcℓ + 273)⁴ - (Tr + 273)⁴} + fcℓ·hc·(Tcℓ - Ta)}$ 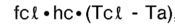 , "R* + C*" indicates ${\text{Fcℓ x (T}}_{\text{sk}} {\text{- T}}_{\text{eq}} \text{*)}$ .

As is apparent from the above description, according to the present invention, the sensor temperature Tcr is controlled to be equal to the set temperature ϑ₍ₜₕ₎ which is not constant and changes depending on environmental conditions. According to the first and fifth aspects of the present invention, if the sensor temperature Tcr is higher than the set temperature ϑ₍ₜₕ₎, the equivalent temperature Teq* is calculated on the basis of the air temperature Ta, the set temperature ϑ₍ₜₕ₎, the difference ΔTcr, the air velocity Vair, the coefficients c₁ to c₅, and the coefficient n. According to the second and sixth aspects of the present invention, if the sensor temperature Tcr is lower than the set temperature ϑ₍ₜₕ₎, the equivalent temperature Teq^{*} is calculated on the basis of the air temperature Ta, the set temperature ϑ₍ₜₕ₎, the thermal energy Hϑ₍ₜₕ₎, and the coefficients b₁ to b₄. Therefore, even if the air velocity Vair is high, or the sensor temperature Tcr is higher than the set temperature ϑ₍ₜₕ₎, the calculated equivalent temperature Teq* coincides with the equivalent temperature Teq felt by a human body with high accuracy, thus allowing accurate measurement of the equivalent temperature Teq.

In addition, according to the third, fourth, seventh, and eighth aspects of the present invention, since the equivalent temperature Teq* which coincides with the equivalent temperature Teq with high accuracy is used, the predicted mean thermal sensitivity PMV* can be accurately obtained.

## Claims

1. A method of calculating thermal sensitivity, comprising the steps of:
calculating a set temperature ϑ₍ₜₕ₎ on the basis of an air temperature Ta and a clothing thermal resistance Icℓ;
supplying thermal energy information Hϑ₍ₜₕ₎ to heating means capable of adjusting a sensor temperature Tcr so as to set the set temperature ϑ₍ₜₕ₎ to be equal to the sensor temperature Tcr; and
calculating an equivalent temperature Teq* on the basis of the air temperature Ta, the set temperature ϑ₍ₜₕ₎, the thermal energy information Hϑ₍ₜₕ₎, and coefficients b₁ to b₄, according to the following equation (a), when the sensor temperature Tcr is lower than the set temperature ϑ₍ₜₕ₎,
and calculating the equivalent temperature Teq* on the basis of the air temperature Ta, the set temperature ϑ₍ₜₕ₎, a difference ΔTcr between the sensor temperature Tcr and the set temperature ϑ₍ₜₕ₎, an air velocity Vair, a coefficient c₁ expressed in consideration of the clothing thermal resistance Icℓ, coefficients c₂ to c₆, and a coefficient n, according to the following equation (b), when the sensor temperature Tcr is higher than the set temperature ϑ₍ₜₕ₎,$\begin{matrix}\begin{matrix}\begin{matrix}{\text{Teq* = b₁ + b₂ x ϑ}}_{\text{(th)}} {\text{+ b₃ x Ta - b₄ x Hϑ}}_{\text{(th)}}\end{matrix} \\ \begin{matrix}{\text{Teq* = c₁ + c₂ x ϑ}}_{\text{(th)}} {\text{+ c₃ x Ta + c₄ x (1 + c₅ x Vair}}^{\text{n}} {\text{) x ΔTcr - c₆ x Hϑ}}_{\text{(th)}}\end{matrix}\end{matrix}\end{matrix}$

2. The method according to claim 1, further comprising the step of:
calculating predicted mean thermal sensitivity PMV* on the basis of the obtained equivalent temperature Teq*, a humidity RH, an activity amount Mₑₜ, a skin temperature Tₛₖ ( ${\text{T}}_{\text{sk}} {\text{= 35.7 - 0.0275 x M}}_{\text{et}} \text{x 58.15}$ ) 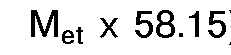 , the air temperature Ta, an absolute water vapor pressure P(Ta) at the air temperature Ta, the clothing thermal resistance Icℓ, a thermal resistance effect Fcℓ ( $\text{Fcℓ = E₁/(E₂ + E₃ x Icℓ )}$ ) based on coefficients E₁ to E₃, and coefficients D₁ to D₇, according to the following equation (c),$\text{PMV* = α x LOAD*}$ where ${\text{α = 0.303 x EXP(-0.036 X M}}_{\text{et}} \text{x 58.15) + 0.028}$
if Mₑₜ < 1.0, then${\text{LOAD* = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} {\text{) x RH x P(Ta) - Fcℓ x (T}}_{\text{sk}} \text{- Teq*)}$ if Mₑₜ ≧ 1.0, then${\text{LOAD* = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} {\text{) x RH x P(Ta) - D₇ x (M}}_{\text{et}} {\text{- 1) - Fcℓ x (T}}_{\text{sk}} \text{-Teq*)}$

3. A thermal sensitivity calculating apparatus, which is arranged with respect to an environment measuring section (5) having heating means (5-12) capable of adjusting a sensor temperature Tcr, comprising:
set temperature calculating means (3-1) for calculating a set temperature ϑ₍ₜₕ₎ on the basis of an air temperature Ta and a clothing thermal resistance Icℓ;
thermal energy supplying means (3-2) for supplying thermal energy information Hϑ₍ₜₕ₎ to said heating means (5-12) so as to set the set temperature ϑ₍ₜₕ₎ to be equal to the sensor temperature Tcr; and
thermal sensitivity calculating means (3-3, 3-3') for calculating an equivalent temperature Teq* on the basis of the air temperature Ta, the set temperature ϑ₍ₜₕ₎, the thermal energy information Hϑ₍ₜₕ₎, and coefficients b₁ to b₄, according to the following equation (a), when the sensor temperature Tcr is lower than the set temperature ϑ₍ₜₕ₎,
and calculating the equivalent temperature Teq* on the basis of the air temperature Ta, the set temperature ϑ₍ₜₕ₎, a difference ΔTcr between the sensor temperature Tcr and the set temperature ϑ₍ₜₕ₎, an air velocity Vair, a coefficient c₁ expressed in consideration of the clothing thermal resistance Icℓ, coefficients c₂ to c₆, and a coefficient n, according to the following equation (b), when the sensor temperature Tcr is higher than the set temperature ϑ₍ₜₕ₎,$\begin{matrix}\begin{matrix}\begin{matrix}{\text{Teq* = b₁ + b₂ x ϑ}}_{\text{(th)}} {\text{+ b₃ x Ta - b₄ x Hϑ}}_{\text{(th)}}\end{matrix} \\ \begin{matrix}{\text{Teq* = c₁ + c₂ x ϑ}}_{\text{(th)}} {\text{+ c₃ x Ta + c₄ x (1 + c₅ x Vair}}^{\text{n}} {\text{) x ΔTcr - c₆ x Hϑ}}_{\text{(th)}}\end{matrix}\end{matrix}\end{matrix}$

4. The apparatus according to claim 3, further comprising:
predicted mean thermal sensitivity calculating means (8) for calculating predicted mean thermal sensitivity PMV* on the basis of the equivalent temperature Teq* obtained by said thermal sensitivity calculating apparatus (1), a humidity RH, an activity amount Mₑₜ, a skin temperature Tₛₖ ( ${\text{T}}_{\text{sk}} {\text{= 35.7 - 0.0275 x M}}_{\text{et}} \text{x 58.15}$ ) 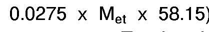 , the air temperature Ta, an absolute water vapor pressure P(Ta) at the air temperature Ta, the clothing thermal resistance Icℓ, a thermal resistance effect Fcℓ ( $\text{Fcℓ = E₁/(E₂ + E₃ x Icℓ)}$ ) 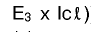 based on coefficients E₁ to E₃, and coefficients D₁ to D₇, according to the following equation (c),$\text{PMV* = α x LOAD*}$ where ${\text{α = 0.303 x EXP(-0.036 x M}}_{\text{et}} \text{x 58.15) + 0.028}$
if Mₑₜ < 1.0, then${\text{LOAD* = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} {\text{) x RH x P(Ta) - Fcℓ x (T}}_{\text{sk}} \text{- Teq*)}$ if Mₑₜ ≧ 1.0, then${\text{LOAD* = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} {\text{) x RH x P(Ta) - D₇ x (M}}_{\text{et}} {\text{- 1) - Fcℓ x (T}}_{\text{sk}} \text{-Teq*)}$

## Patentansprüche

1. Ein Verfahren zum Berechnen einer Wärmeempfindlichkeit, das die Schritte aufweist:
Berechnen einer Einstelltemperatur ϑ₍ₜₕ₎ auf der Grundlage einer Lufttemperatur Ta und eines BekleidungsWärmewiderstands Icℓ;
Zuführen einer Wärmeenergieinformation Hϑ₍ₜₕ₎ zu einer Heizeinrichtung, die eine Sensortemperatur Tcr so einstellen kann, daS die Einstelltemperatur ϑ₍ₜₕ₎ und die Sensortemperatur Tcr gleichgesetzt werden; und
Berechnen einer Äquivalenztemperatur Teq* auf der Grundlage der Lufttempertur Ta, der Einstelltemperatur ϑ₍ₜₕ₎, der Wärmeenergieinformation Hϑ₍ₜₕ₎ und von Koeffizienten b₁ bis b₄ entsprechend der nachfolgenden Gleichung (a), wenn die Sensortemperatur Tcr geringer als die Einstelltemperatur ϑ₍ₜₕ₎ ist,
und Berechnen der Äquivalenztemperatur Teq* auf der Grundlage der Lufttemperatur Ta, der Einstelltemperatur ϑ₍ₜₕ₎, einer Differenz ΔTcr zwischen der Sensortemperatur Tcr und der Einstelltemperatur ϑ₍ₜₕ₎, einer Luftgeschwindigkeit Vair, eines Koeffizienten c₁, der in Anbetracht des Bekleidungs-Wärmewiderstands Icℓ ausgedrückt wird, von Koeffizienten c₂ bis c₆ und eines Koeffizienten n gemäß der nachfolgenden Gleichung (b), wenn die Sensortemperatur Tcr höher als die Einstelltemperatur ϑ₍ₜₕ₎ ist,$\begin{matrix}\begin{matrix}\begin{matrix}{\text{Teq* = b₁ + b₂ × ϑ}}_{\text{(th)}} {\text{+ b₃ × Ta - b₄ × Hϑ}}_{\text{(th)}}\end{matrix} \\ \begin{matrix}{\text{Teq* = c₁ + c₂ × ϑ}}_{\text{(th)}} \text{+ c₃ × Ta + c₄ × (1 + c₅ × Vair} {\text{}}^{{\text{n}}_{̲}} {\text{) × ΔTcr - c₆ × Hϑ}}_{\text{(th)}}\end{matrix}\end{matrix}\end{matrix}$

2. Das Verfahren nach Anspruch 1, das ferner den Schritt vorsieht:
Berechnen der vorhergesagten mittleren Wärmeempfindlichkeit PMV* auf der Grundlage der erhaltenen Äquivalenztemperatur Teq*, einer Feuchtigkeit RH, eines Aktivitätsbetrages Mₑₜ, einer Hauttemperatur Tₛₖ ( ${\text{T}}_{\text{sk}} {\text{= 35,7 - 0,0275 × M}}_{\text{et}} \text{× 58,15}$ ), der Lufttemperatur Ta, eines absoluten Wasserdampfdruckes P(Ta) bei der Lufttemperatur Ta, des Bekleidungs-Wärmewiderstands Icℓ, einer Wärmewiderstandwirkung Fcℓ ( $\text{Fcℓ = E₁/(E₂ + E₃ × Icℓ)}$ ), die auf Koeffizienten E₁ bis E₃ beruht, und Koeffizienten D₁ bis D₇ entsprechend der nachfolgenden Gleichung (c)$\text{PMV* = α × LOAD*,}$ wobei ${\text{α = 0,303 × EXP(-0,036 × M}}_{\text{et}} \text{× 58,15) + 0,028}$ gilt; falls Mₑₜ < 1,0 ist, dann gilt${\text{LOAD* = D₁ + D₂ × M}}_{\text{et}} {\text{- D₃ × T}}_{\text{sk}} {\text{+ D₄ × M}}_{\text{et}} {\text{× Ta + (D₅ + D₆ × M}}_{\text{et}} {\text{) × RH × P(Ta) - Fcℓ × (T}}_{\text{sk}} \text{- Teq*),}$ falls Mₑₜ ≧ 1,0 ist, dann gilt${\text{LOAD* = D₁ + D₂ × M}}_{\text{et}} {\text{- D₃ × T}}_{\text{sk}} {\text{+ D₄ × M}}_{\text{et}} {\text{× Ta + (D₅ + D₆ × M}}_{\text{et}} {\text{) × RH × P(Ta) - D₇ × (M}}_{\text{et}} {\text{- 1) - Fcℓ × (T}}_{\text{sk}} \text{- Teq*).}$

3. Eine Wärmeempfindlichkeits-Berechnungsvorrichtung, die hinsichtlich eines Umgebungs-Meßabschnitts (5) mit einer Heizeinrichtung (5-12) angeordnet ist, die eine Sensortemperatur Tcr einstellen kann, aufweisend:
eine Einstelltemperatur-Berechnungseinrichtung (3-1) zum Berechnen einer Einstelltemperatur ϑ₍ₜₕ₎ auf der Grundlage einer Lufttemperatur Ta und eines Bekleidungs-Wärmewiderstands Icℓ;
eine Wärmeenergie-Zufuhreinrichtung (3-2) zum Zuführen einer Wärmeenergieinformation Hϑ₍ₜₕ₎ zur Heizeinrichtung (5-12), so daß die Einstelltemperatur ϑ₍ₜₕ₎ und die Sensortemperatur Tcr gleichgesetzt werden; und
eine Wärmeempfindlichkeits-Berechnungseinrichtung (3-3, 3-3') zum Berechnen einer Äquivalenztemperatur Teq* auf der Grundlage der Lufttemperatur Ta, der Einstelltemperatur ϑ₍ₜₕ₎, der Wärmeenergieinformation Hϑ₍ₜₕ₎ und von Koeffizienten b₁ bis b₄ gemäß der nachfolgenden Gleichung (a), falls die Sensortemperatur Tcr geringer als die Einstelltemperatur ϑ₍ₜₕ₎ ist,
und zum Berechnen der Äquivalenztemperatur Teq* auf der Grundlage der Lufttemperatur Ta, der Einstelltemperatur ϑ₍ₜₕ₎, einer Differenz ΔTcr zwischen der Sensortemperatur Tcr und der Einstelltemperatur ϑ₍ₜₕ₎, einer Luftgeschwindigkeit Vair, eines Koeffizienten c₁, der in Anbetracht des Bekleidungs-Wärmewiderstands Icℓ ausgedrückt wird, von Koeffizienten c₂ bis c₆ und eines Koeffizienten n gemäß der nachfolgenden Gleichung (b), wenn die Sensortemperatur Tcr höher als die Einstelltemperatur ϑ₍ₜₕ₎ ist,$\begin{matrix}\begin{matrix}\begin{matrix}{\text{Teq* = b₁ + b₂ × ϑ}}_{\text{(th)}} {\text{+ b₃ × Ta - b₄ × Hϑ}}_{\text{(th)}}\end{matrix} \\ \begin{matrix}{\text{Teq* = c₁ + c₂ × ϑ}}_{\text{(th)}} \text{+ c₃ × Ta + c₄ × (1 + c₅ × Vair} {\text{}}^{{\text{n}}_{̲}} {\text{) × ΔTcr - c₆ × Hϑ}}_{\text{(th)}}\end{matrix}\end{matrix}\end{matrix}$

4. Die Vorrichtung nach Anspruch 3, ferner aufweisend: eine Berechnungseinrichtung (8) für eine vorhergesagte mittlere Wärmeempfindlichkeit zum Berechnen einer vorhergesagten mittleren Wärmeempfindlichkeit PMV* auf der Grundlage der Äquivalenztemperatur Teq*, die durch die Wärmeempfindlichkeits-Berechnungseinrichtung (1) erhalten wird, einer Feuchtigkeit RH, eines Aktivitätsbetrages Mₑₜ, einer Hauttemperatur Tₛₖ ( ${\text{T}}_{\text{sk}} {\text{= 35,7 - 0,0275 × M}}_{\text{et}} \text{× 58,15}$ ), der Lufttemperatur Ta, eines absoluten Wasserdampfdruckes P(Ta) bei der Lufttemperatur Ta, des Bekleidungs-Wärmewiderstands Icℓ, einer Wärmewiderstandswirkung Fcℓ ( $\text{Fcℓ = E₁/(E₂ + E₃ × Icℓ)}$ ), die auf Koeffizienten E₁ bis E₃ beruht, und von Koeffizienten D₁ bis D₇ gemäß der nachfolgenden Gleichung (c),$\text{PMV* = α × LOAD*,}$ wobei ${\text{α = 0,303 × EXP(-0,036 × M}}_{\text{et}} \text{× 58,15) + 0,028}$ gilt; falls Mₑₜ < 1,0 ist, dann gilt${\text{LOAD* = D₁ + D₂ × M}}_{\text{et}} {\text{- D₃ × T}}_{\text{sk}} {\text{+ D₄ × M}}_{\text{et}} {\text{× Ta + (D₅ + D₆ × M}}_{\text{et}} {\text{) × RH × P(Ta) - Fcℓ × (T}}_{\text{sk}} \text{- Teq*),}$ falls Mₑₜ ≧ 1,0 ist, dann gilt${\text{LOAD* = D₁ + D₂ × M}}_{\text{et}} {\text{- D₃ × T}}_{\text{sk}} {\text{+ D₄ × M}}_{\text{et}} {\text{× Ta + (D₅ + D₆ × M}}_{\text{et}} {\text{) × RH × P(Ta) - D₇ × (M}}_{\text{et}} {\text{- 1) - Fcℓ × (T}}_{\text{sk}} \text{- Teq*).}$

## Revendications

1. Procédé de calcul de la sensibilité thermique comprenant les étapes consistant à :
calculer une température de référence ϑ₍ₜₕ₎ sur la base d'une température Ta de l'air et de la résistance thermique des vêtements Icℓ ;
fournir une information d'énergie thermique Hϑ₍ₜₕ₎ à des moyens de chauffage susceptibles d'ajuster une température Tcr d'un détecteur de façon à régler la température de référence ϑ₍ₜₕ₎ de manière qu'elle soit égale à la température Tcr du détecteur ; et
calculer une température équivalente Teq* sur la base de la température Ta de l'air, de la température de référence ϑ₍ₜₕ₎, de l'information d'énergie thermique Hϑ₍ₜₕ₎, et de coefficients b₁ à b₄, conformément à l'équation suivante (a), lorsque la température Tcr du détecteur est inférieure à la température de référence ϑ₍ₜₕ₎,
et calculer la température équivalente Teq* sur la base de la température Ta de l'air, de la température de référence ϑ₍ₜₕ₎, d'une différence ΔTcr entre la température Tcr du détecteur et la température de référence ϑ₍ₜₕ₎, d'une vitesse Vair de l'air, d'un coefficient c₁ exprimé en prenant en considération la résistance thermique Icℓ des vêtements, de coefficients c₂ à c₆, et un coefficent n conformément à l'équation (b) lorsque la température Tcr du détecteur est supérieure à la température de référence ϑ₍ₜₕ₎,$\begin{matrix}\begin{matrix}\begin{matrix}{\text{Teq* = b₁ + b₂ x ϑ}}_{\text{(th)}} {\text{+ b₃ x Ta - b₄ x Hϑ}}_{\text{(th)}}\end{matrix} \\ \begin{matrix}{\text{Teq* = c₁ + c₂ x ϑ}}_{\text{(th)}} {\text{+ c₃ x Ta + c₄ x (1 + c₅ x Vair}}^{\text{n}} {\text{) x ΔTcr - c₆ x Hϑ}}_{\text{(th)}}\end{matrix}\end{matrix}\end{matrix}$

2. Procédé selon la revendication 1, comprenant en outre les étapes consistant à :
calculer une sensibilité thermique moyenne prédite PMV* sur la base de la température équivalente obtenue Teq*, de l'humidité RH, d'une quantité d'activité Mₑₜ, d'une température de peau Tₛₖ ( ${\text{T}}_{\text{sk}} {\text{= 35,7 - 0.0275 x M}}_{\text{et}} \text{x 58,15}$ ) 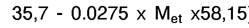 , de la température Ta de l'air, d'une pression de vapeur d'eau absolue P(Ta) à la température Ta de l'air, de la résistance thermique des vêtements Icℓ, de l'effet de résistance thermique Fcℓ ( $\text{Fcℓ = E₁/(E₂ + E₃ x Icℓ)}$ ) fondé sur des coefficients E₁ à E₃, et de coefficients D₁ à D₇ conformément à l'équation suivante (c),$\text{PMV* = α x LOAD*}$ dans laquelle ${\text{α = 0,303 x EXP (- 0,036 x M}}_{\text{et}} \text{x 58,15) + 0,028}$
si Mₑₜ < 1,0 alors${\text{LOAD* = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} {\text{) x RH x P(Ta) - Fcℓ x (T}}_{\text{sk}} \text{- Teq*)}$ si Mₑₜ ≧ 1,0, alors${\text{LOAD* = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} {\text{) x RH x P(Ta) - D₇ x (M}}_{\text{et}} {\text{- 1) - Fcℓ x (T}}_{\text{sk}} \text{- Teq*)}$

3. Appareil pour calculer la sensibilité thermique, lequel est disposé par rapport à une section (5) de mesure de l'environnement, comportant des moyens de chauffage (5-12) susceptibles d'ajuster une température Tcr d'un détecteur, comprenant :
des moyens de calcul d'une température de référence (3-1) pour calculer une température de référence ϑ₍ₜₕ₎ sur la base d'une température Ta de l'air et d'une résistance thermique Icℓ des vêtements ;
des moyens pour fournir de l'énergie thermique (3-2) pour fournir une information d'énergie thermique Hϑ₍ₜₕ₎ auxdits moyens de chauffage (5-12) de façon à régler la température de référence ϑ₍ₜₕ₎ de manière qu'elle soit égale à la température Tcr du détecteur ; et
des moyens de calcul de la sensibilité thermique (3-3, 3-3') pour calculer une température équivalente Teq* sur la base de la température Ta de l'air, de la température de référence ϑ₍ₜₕ₎, de l'information d'énergie thermique Hϑ₍ₜₕ₎, et de coefficients b₁ à b₄, conformément à l'équation suivante (a), lorsque la température Tcr du détecteur est inférieure à la température ϑ₍ₜₕ₎, et calculant la température équivalente Teq* sur la base de la température Ta de l'air de la température de référence ϑ₍ₜₕ₎, d'une différence ΔTcr entre la température du détecteur Tcr et la température de référence ϑ₍ₜₕ₎, d'une vitesse de l'air Vair, d'un coefficient c₁ exprimé en prenant en considération la résistance thermique Icℓ des vêtements, de coefficients c₂ à c₆, et d'un coefficient n, conformément à l'équation suivante (b), lorsque la température Tcr du détecteur est supérieure à la température de référence ϑ₍ₜₕ₎,$\begin{matrix}\begin{matrix}\begin{matrix}{\text{Teq* = b₁ + b₂ x ϑ}}_{\text{(th)}} {\text{+ b₃ x Ta - b₄ x Hϑ}}_{\text{(th)}}\end{matrix} \\ \begin{matrix}{\text{Teq* = c₁ + c₂ x ϑ}}_{\text{(th)}} {\text{+ c₃ x Ta + c₄ x (1 + c₅ x Vair}}^{\text{n}} {\text{) x ΔTcr - c₆ x Hϑ}}_{\text{(th)}}\end{matrix}\end{matrix}\end{matrix}$

4. Appareil selon la revendication 3, comprenant en outre des moyens (8) pour calculer la senisibilité thermique moyenne prévue pour calculer la sensibilité thermique moyenne prédite PMV* sur la base de la température équivalente Teq* obtenue par ledit appareil (1) de calcul de la sensibilité thermique, de l'humidité RH, d'une quantité d'activité Mₑₜ, de la température Tₛₖ de la peau ( ${\text{T}}_{\text{sk}} {\text{= 35,7 - 0,0275 x M}}_{\text{et}} \text{x 58,15}$ ), 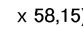 de la température Ta de l'air, d'une pression absolue P(Ta) de vapeur d'eau, à la température Ta de l'air, de la résistance thermique Icℓ des vêtements, de l'effet de résistance thermique Fcℓ ( $\text{Fcℓ = E₁/(E₂ + E₃ x Icℓ)}$ 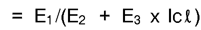 ) fondé sur des coefficients E₂ à E₃, et de coefficients D₁ à D₇, conformément à l'équation suivante (c),$\text{PMV* = α x LOAD*}$ dans laquelle ${\text{α = 0,303 x EXP (- 0,036 x M}}_{\text{et}} \text{x 58,15) + 0,028}$
si Mₑₜ < 1,0 alors${\text{LOAD* = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} {\text{) x RH x P(Ta) - Fcℓ x (T}}_{\text{sk}} \text{- Teq*)}$ si Mₑₜ ≧ 1,0 alors${\text{LOAD* = D₁ + D₂ x M}}_{\text{et}} {\text{- D₃ x T}}_{\text{sk}} {\text{+ D₄ x M}}_{\text{et}} {\text{x Ta + (D₅ + D₆ x M}}_{\text{et}} {\text{) x RH x P(Ta) - D₇ x (M}}_{\text{et}} {\text{- 1) - Fcℓ x (T}}_{\text{sk}} \text{- Teq*)}$
